# EUROPEAN PATENT SPECIFICATION

(11) **EP 0 712 470 B1**
(45) Date of publication and mention of the grant of the patent: **04.03.1998**
(21) Application number: 94924803.3
(22) Date of filing: 26.07.1994
(51) Int. Cl.: F16H 35/06, F16H 1/48, F16C 23/08

(54) **SPEED REDUCTION UNIT WITH BEARING**
UNTERSETZUNGSGETRIEBE MIT LAGER
REDUCTEUR DE VITESSE A PALIER

(30) Priority: 13.08.1993 IT PD930172
(43) Date of publication of application: 22.05.1996
(73) Proprietor: CASAROTTO, G. & C. S.R.L., I-45021 Badia Polesine (IT)
(72) Inventor: CASAROTTO, Giorgio, I-45021 Badia Polesine (IT)
(74) Representative: Cantaluppi, Stefano
(86) International application number: EP9402462
(87) International publication number: WO9505552

(56) References cited:
- DE-A- 3 919 424
- FR-A- 2 284 072
- GB-A- 917 468
- US-A- 2 612 788
- US-A- 3 891 286

## Description

### Technical field

This invention relates to a speed reduction unit according to the preamble of claim 1.

### Background art

As is known, speed reduction units are usually coupled to driven parts with the intermediary of couplings, keyed shafts, hollow-construction shafts, and the like arrangements. Rigid couplings are used in certain applications, and in that case the reduction unit is also to provide support for the driven part. A typical application would be belt conveyors, where a ratio motor is used to drive the belt entrainment drum.

In such applications, or where the speed reduction unit forms one of the two bearing points between the rotatively driven part and the structure on which this is mounted, it is necessary that comparatively close alignment tolerances be maintained between the bearing points.

This requires a degree of accuracy which is usually hard to comply with in certain structures, especially where structural work bearing arrangements are involved. Ratio motors of the pendulum type better suit such applications wherein the rotary parts are supported independently, e.g. by means of self-aligning bearings mounted pivotally on the load-bearing structure and the reduction gear is keyed to the shaft of said parts and carried thereon in a pendulum fashion. The use of self-aligning bearings is, in fact, preferred there to confer self-aligning features on the bearing points. However, increased axial space requirements are incurred in that case, especially where epicyclic reduction gears are employed. In addition, joints must often be provided between the reduction gear output shaft and the rotatively driven shaft which are cost-intensive.

In US 2,612,788, which shows the features of the precharacterizing portion of claim 1, there is disclosed a speed reduction unit wherein a swing mount is provided between a first casing part of the unit and the bearing structure of a load to thereby support in self-aligning fashion the load as well as the reduction unit on the bearing structure.

The gear reduction unit includes a toothed wheel which is integral with the output shaft of the unit.

FR-A-2284072 is also prior art to this invention.

The underlying problem of this invention is to provide a speed reduction unit which is so constructed and operated as to overcome all of the shortcomings with which the above prior art is beset.

### Disclosure of invention

This problem is solved by a reduction unit as indicated according to claim 1.

### Brief description of drawings

The features and advantages of the invention will become more clearly apparent from the following detailed description of two embodiments thereof, shown by way of example and not of limitation in the accompanying drawings, in which:
Figure 1 is an axial section view through a portion of a mechanical load equipped with a reduction unit according to the invention;
Figure 2 is an axial section view through a portion of a mechanical load in a modified embodiment of the invention;
Figure 3 is a cross-section view taken along a line III-III in Figure 2.

### Modes for carrying out the invention

Generally shown at 1 in the drawing figures is a load-bearing structure of a load, e.g. a belt conveyor of which a drum 2 is also shown.

The drum 2 is carried, rotatable about an axis X, on the structure 1 and driven for rotation about said axis from a speed reduction unit 3, only partly depicted in the figures.

The reduction unit 3, which may be a ratio motor, is an epicyclic type having a casing 4 which includes two half-shells 4a,b clamped together by means of links 5 through an interposed ring gear 6 having an internal toothing 7. In a conventional manner, the reduction unit further comprises a sun gear 8 keyed to an input shaft 10, and a plurality of planet gears 9 in mesh engagement with both the sun gear 8 and the toothing 7 of the ring gear 6.

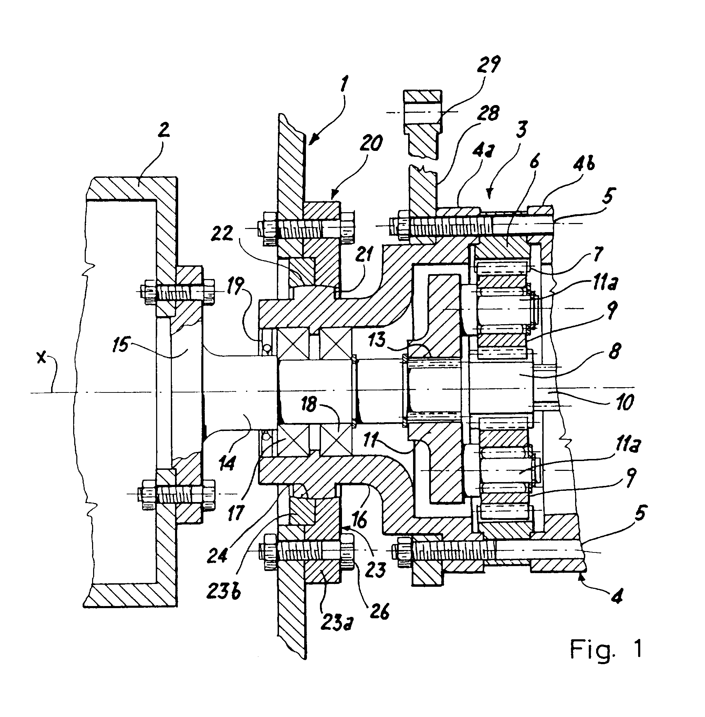

The planet gears 9 are idlers carried on respective stub shafts lla of a planetary gear carrier 11. The planetary gear carrier 11 is in turn keyed to an output shaft 14 of the reduction unit by means of a splined connection 13. This shaft 14 carries, on its remote end from the splined connection 13, a flange 15 through which it is attached to the drum 2, and is supported at a sleeve portion 16 of the half-shell 4a in two radial bearings 17, 18 having an oil seal 19 associated therewith. The bearings 17, 18 also function as a second bearing point for the drum 2 by virtue of the rigid connection between the drum 2 and the flange 15 on the shaft 14, with the first drum bearing point (not illustrated) being located at the axially opposite end of the drum. It is essential to proper operation of the supports that the two bearings 17, 18 be aligned true along the axis X. Present any inaccuracies in the structure 1, this alignment may turn out to be critical in the instance of conventional reduction gears having their casing attached to the structure 1. Optimum alignment conditions are readily achieved, on the other hand, in the reduction unit of Figure 1 by the casing 4 of the reduction unit 3 being attached to the load-bearing structure 1 through an adjustable washer mount generally shown at 20.

The mount 20 comprises a washer 21 having a hemispherical convex surface 22; the washer 21 is formed integrally with the outer shroud of the sleeve portion 16 and is fitted for swinging movement in a convex surface socket 24 of a flanged support 23. For convenience of assembly, the flanged support 23 is made up of two halves 23a,b bonded to each other in a conventional manner. One half 23a is fastened to the structure 1 by means of screws 26.

The casing 4 of the reduction unit 3 is, therefore, let free to swing and align itself to the load-bearing structure 1 within the range of oscillation permitted by the mount 20, but is not allowed to rotate, any rotation being resisted by a reaction arm 28 which has a first end attached to one of the links 5 and a second opposite end 29 attached to the structure 1.

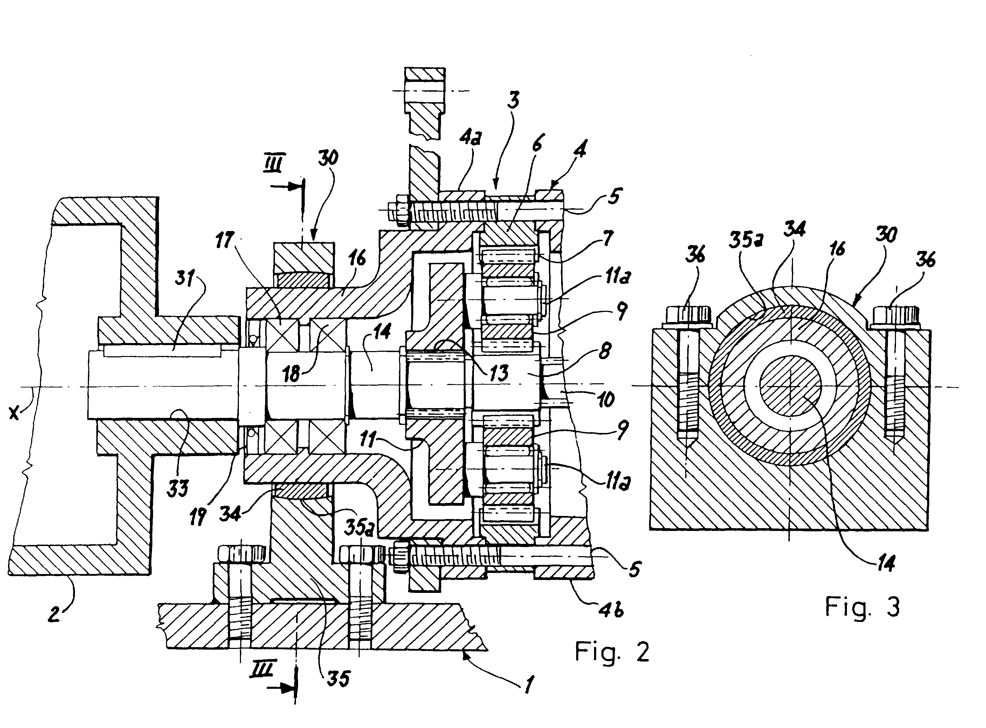

The example shown in Figures 2 and 3 mainly differs from the previous one by the shape of the adjustable washer mount, generally denoted here by the numeral 30. Similar parts to those of the previous example are denoted by the same reference numerals. Another difference comes from the coupling arrangement of the output shaft 14 to a collar 33 on the drum 2 including a key 31.

The mount 30 comprise a washer 34 fitted over the outer shroud of the sleeve portion 16 of the half-shell 4a, which washer is clamped for oscillation within a hemispherical surface socket 35a on an upright support 35. The support 35 is a split construction with the two halves held together by screws 36.

In either of the examples described, by having the casing of the reduction unit 3 attached to the load-bearing structure 1 of the load, the output shaft 14 bearings can be used to hold at least one of the axial ends of the rotating part of the load corresponding to the drum 2. Concurrently therewith, the provision of an adjustable support through which the casing of the reduction unit is attached to the load enables any alignment error to be accommodated between the bearing points.

## Claims

1. A speed reduction unit comprising:
- a casing (4) including at least a first and a second casing part (4a,b) removably associated to each other,
- an output shaft (14) rotatably supported on said first casing part (4a),
- at least one radial bearing (17,18) between said output shaft (14) and said first casing part (4a) to rotatively support said shaft (14) and a load associated therewith within said first casing part (4a) while impeding swivel movement between said shaft (14) and said first casing part (4a), and
- means of securing said casing (4) on a support structure (1) of said load, said securing means comprising a swivel mount (20;30) effective to secure said first casing part (4a) on said load support structure in a manner allowing for limited swivel movements, characterised in that said output shaft (14) is directly supported on said first casing part (4a) by said at least one radial bearing (17, 18), said speed reduction unit includes an epicyclic reduction gear with a planetary gear carrier (11) structurally independent of said output shaft (14), said planetary gear carrier (11) being mounted on said output shaft and directly coupled thereto for rotation therewith.

2. A reduction unit according to claim 1, wherein said planetary gear carrier (11) is keyed to said output shaft (14) by means of a splined connection (13).

3. A reduction unit according to claim 1, wherein said swivel mount (20; 30) is of the adjustable washer type.

4. A reduction unit according to claim 3, wherein said washer (21) is formed integrally with said casing (4).

5. A reduction unit according to one or more of the preceding claims, and including a reaction arm (28) for making said casing (4) rotatively rigid with said structure (1).

## Patentansprüche

1. Untersetzungsgetriebe, enthaltend:
- ein Gehäuse (4), das mindestens ein erstes und ein zweites Gehäuseteil (4a, b) besitzt, die abnehmbar miteinander in Verbiridung gebracht sind,
- eine drehbar auf dem ersten Gehäuseteil (4a) gelagerte Ausgangswelle (14),
- mindestens ein Radiallager (17, 18) zwischen der Ausgangswelle (14) und dem ersten Gehäuseteil (4a), um die Welle (14) und eine damit verbundene Last innerhalb des ersten Gehäuseteils (4a) drehbar zu lagern, während eine Schwenkbewegung zwischen der Welle (14) und dem ersten Gehäuseteil (4a) behindert wird,
- Mittel zur Befestigung des Gehäuses (4) auf einer Stützstruktur (1) der Last, wobei die Befestigungsmittel eine Schwenkhalterung (20, 30) aufweisen, die eine Befestigung des ersten Gehäuseteils (4a) auf der Stützstruktur (1) in einer Weise bewirkt, die beschränkte Schwenkbewegungen erlaubt,
**dadurch gekennzeichnet**, daß die Ausgangswelle (14) durch mindestens ein Radiallager (17, 18) direkt auf dem ersten Gehäuseteil (4a) gelagert ist, daß das Untersetzungsgetriebe ein Epizykel-Untersetzungsgetriebe mit einem von der Ausgangswelle (14) strukturell unabhängigen Planetenrad-Träger (11) enthält, daß der Planetenrad-Träger (11) auf der Ausgangswelle montiert und zur Drehung damit direkt an diese gekoppelt ist.

2. Untersetzungsgetriebe nach Anspruch 1, dadurch gekennzeichnet, daß der Planetenrad-Träger (11) mit der Ausgangswelle (14) durch eine Längsnutverbindung (13) verkeilt ist.

3. Untersetzungsgetriebe nach Anspruch 1, dadurch gekennzeichnet, daß die Schwenkhalterung (20, 30) vom Typ einer verstellbaren Unterlegscheibe ist.

4. Untersetzungsgetriebe nach Anspruch 3, dadurch gekennzeichnet, daß die Unterlegscheibe (21) an das Gehäuse (4) angeformt ist.

5. Untersetzungsgetriebe nach einem oder mehreren der vorstehenden Ansprüche, dadurch gekennzeichnet, daß einen Gegenwirkungsarm (28), um das Gehäuse (4) mit der Struktur (1) rotationsstarr zu machen, aufweist.

## Revendications

1. Unité de réduction de vitesse comprenant :
- un boîtier (4) qui inclut au moins une première et une seconde partie de boîtier (4a, 4b) associées de façon amovible l'une à l'autre,
- un arbre de sortie (14) supporté en rotation sur ladite première partie de boîtier (4a),
- au moins un palier radial (17, 18) entre ledit arbre de sortie (14) et ladite première partie de boîtier (4a) pour supporter en rotation ledit arbre (14) et une charge associée à celui-ci à l'intérieur de ladite première partie de boîtier (4a) tout en empêchant un mouvement de pivotement entre ledit arbre (14) et ladite première partie de boîtier (4a), et
- des moyens pour attacher ledit boîtier (4) sur une structure de support (1) de ladite charge, lesdits moyens d'attache comprenant une monture pivotante (20 ; 30) capable d'attacher ladite première partie de boîtier (4a) sur ladite structure de support de charge d'une manière qui permet des mouvements de pivotement limités, caractérisée en ce que ledit arbre de sortie (14) est directement supporté sur ladite première partie de boîtier (4a) par ledit au moins un palier radial (17, 18), ladite unité de réduction de vitesse comprenant un engrenage de réduction à planétaires avec un porte-engrenages planétaires (11) structurellement indépendant dudit arbre de sortie (14), ledit porte-engrenages planétaires (11) étant monté sur ledit arbre de sortie et directement accouplé à celui-ci en vue d'une rotation conjointement avec lui.

2. Unité de réduction selon la revendication 1, dans laquelle ledit porte-engrenages planétaires (11) est claveté sur ledit arbre de sortie (14) au moyen d'une connexion à cannelures (13).

3. Unité de réduction selon la revendication 1, dans laquelle ladite monture pivotante (20 ; 30) est du type à rondelle ajustable.

4. Unité de réduction selon la revendication 3, dans laquelle ladite rondelle (21) est formée de manière intégrée avec ledit boîtier (4).

5. Unité de réduction selon l'une ou plusieurs des revendications précédentes, et comprenant un bras de réaction (28) pour rendre ledit boîtier (4) rigide en rotation avec ladite structure (1).
